# EUROPEAN PATENT APPLICATION

(11) **EP 4 670 908 A1**
(43) Date of publication of application: **31.12.2025**
(21) Application number: 24788688.0
(22) Date of filing: 08.04.2024
(51) Int. Cl.: B23Q 17/00, B23Q 5/04, B23Q 5/54, B23Q 5/58

(54) **ABNORMALITY DETERMINATION METHOD AND ABNORMALITY DETERMINATION DEVICE FOR FEED SHAFT CLAMP MECHANISM OF MACHINE TOOL**

(30) Priority: 13.04.2023 JP 2023065782
(71) Applicant: Makino Milling Machine Co., Ltd., Tokyo 152-8578 (JP)
(72) Inventor: NAKAYASU, Kazumasa, Aiko-gun, Kanagawa 243-0303 (JP); MAYUMI, Kazuya, Aiko-gun, Kanagawa 243-0303 (JP); MATSUMOTO, Yuki, Aiko-gun, Kanagawa 243-0303 (JP)
(74) Representative: Harvey, Alexander James
(86) International application number: PCT/JP2024/014218
(87) International publication number: WO 2024/214664

(57) **Abstract**

An abnormality determination method for a feed shaft clamp mechanism (52, 56) for a machine tool (12) for maintaining a stopped state of a feed axis (22b, 38), the method including maintaining a stopped state of movement of the feed axis (22b, 38) by operating the clamp mechanism, measuring feed shaft displacement when a plurality of test drive forces (TF1, TF2) are exerted and deriving a correlation (ER) thereof with drive force, setting a judgment drive force different from the test drive forces, predicting an expected displacement (SD) when the judgment drive force is exerted based on the correlation, calculating a displacement tolerance (RA) which provides an allowable fluctuation range for the expected displacement, measuring an actual feed shaft displacement when the judgment drive force is exerted on the feed axis (22b, 38), and judging that the feed shaft clamp mechanism (52, 56) is abnormal when the actual feed shaft displacement deviates from the displacement tolerance.

## Description

### FIELD

The present invention relates to an abnormality determination method and an abnormality determination device for a feed shaft clamp mechanism for maintaining a stopped state of a rotary feed shaft or linear feed shaft of a machine tool.

### BACKGROUND

Though machine tools maintain the stopped state of rotary feed shafts and linear feed shafts by performing a clamping operation thereon, deterioration and breakdown of the feed shaft clamp mechanism may occur due to continuous use of the machine tool. When such breakdown occurs, it is conventionally necessary that a machine tool be disassembled for inspection and repair, which reduces work efficiency and increases costs, exerting a heavy burden on the user. Furthermore, there are problems such as the feed shaft shifting during clamping and machining, which reduces machining accuracy of the workpiece, and the linear feed shaft moving unintentionally in the direction of gravity when the power is turned off.

Thus, Patent Literature 1 discloses a rotary table comprising a clamp mechanism for maintaining a workpiece placement table in a stop position. This rotary table comprises a means which sends a rotation command to the motor so as to gradually increase the torque for rotating the rotary shaft in a state in which the workpiece placement table is clamped by the clamp mechanism, and measures the clamp torque based on the change in the state of the rotary shaft and the torque information of the motor in accordance with the rotation command. Clamp torque as used herein is the rotational torque of the motor when the feed shaft clamp mechanism for maintaining the workpiece placement table in the stop position begins to slip. In general, the clamp torque is set so as to be sufficiently greater than the rated torque of the motor in consideration of safety. Thus, a significant rotational torque is exerted every time the clamp torque is measured to check whether there is an abnormality in the clamp force, in addition to the original role of the clamp device, and as a result, the feed shaft clamp mechanism is subjected to large loads.

### [CITATION LIST]

### [PATENT LITERATURE]

[PTL 1] Japanese Patent No. 5887299

### SUMMARY

### [TECHNICAL PROBLEM]

An object of the present invention is to provide an abnormality determination method and an abnormality determination device for a feed shaft clamp mechanism for a machine tool, which can judge abnormality of the feed shaft clamp mechanism without placing an excessive burden on the feed shaft clamp mechanism and without disassembly of the machine tool.

### [SOLUTION TO PROBLEM]

According to the present invention, there is provided an abnormality determination method for a feed shaft clamp mechanism for a machine tool, which is provided on a feed axis of the machine tool for maintaining a stopped state of the feed axis, the method comprising the steps of maintaining a stopped state of movement of the feed axis by the feed shaft clamp mechanism, measuring feed shaft displacement (rotation/displacement) when a plurality of different test drive forces set in advance are exerted on the feed axis, deriving a correlation between the feed shaft displacements and drive force from the measured feed shaft displacements and the corresponding test drive forces, setting a judgment drive force different from the plurality of test drive forces, and predicting an expected displacement of the feed axis when the judgment drive force is exerted based on the correlation, calculating a displacement tolerance which provides a predetermined allowable fluctuation range for the predicted expected displacement, measuring an actual feed shaft displacement when the judgment drive force is actually exerted on the feed axis, and judging that the feed shaft clamp mechanism is abnormal when the measured actual feed shaft displacement deviates from the displacement tolerance.

According to the present invention, there is further provided an abnormality determination device for a feed shaft clamp mechanism for a machine tool comprising a feed shaft drive device for rotating about a feed axis, a displacement measurement device for the feed axis, and a feed shaft clamp mechanism for maintaining a stopped state of movement of the feed axis, the device comprising a shaft displacement/drive force correlation derivation device for exerting a plurality of different test drive forces set in advance on the feed axis by means of the feed shaft drive device in a state in which a stopped state of driving of the feed axis is maintained by the feed shaft clamp mechanism, and deriving, from feed shaft displacements measured by the displacement measurement device and the corresponding test drive forces, a correlation between the feed shaft displacements and drive force, an expected displacement prediction device for setting a judgment drive force different from the test drive forces from the correlation derived by the shaft displacement/drive force correlation derivation device, and predicting an expected displacement of the feed axis when the judgment drive force is exerted based on the correlation, a displacement tolerance calculation device for calculating a displacement tolerance which provides a predetermined allowable fluctuation range for the expected displacement predicted by the expected displacement prediction device, and a judgment device for judging that the feed shaft clamp mechanism is abnormal when the actual feed shaft displacement measured by the displacement measurement device in a state in which the judgment drive force is actually exerted on the feed shaft deviates from the displacement tolerance calculated by the displacement tolerance calculation device.

### [ADVANTAGEOUS EFFECTS OF INVENTION]

According to the abnormality determination method and abnormality determination device for a feed shaft clamp mechanism for a machine tool of the present invention, it is possible to measure the feed shaft displacement when a plurality of different test drive forces set in advance are exerted on the feed shaft while movement of the feed shaft is maintained in a stopped state by the feed shaft clamp mechanism, and to derive the correlation between the feed shaft displacement and the drive force from the measured feed shaft displacement and the corresponding test drive force. In a normal mechanism, in this case, a normal feed shaft clamp mechanism, there is a certain relationship between the drive force and the displacement which can be approximated by a quadratic function or the like in a linear or elastic range. Thus, in order to derive the correlation between the feed shaft displacement and the drive force, it is necessary to merely understand a plurality of test drive forces and the feed shaft displacements corresponding thereto, whereby a drive force which is less than the rated value can be used as the test drive force. As a result, the correlation between the feed shaft displacement and the drive force for judging an abnormality in the feed shaft clamp mechanism can be derived without placing an excessive burden on the feed shaft clamp mechanism.

Furthermore, according to the abnormality determination method and abnormality determination device for a feed shaft clamp mechanism for a machine tool of the present invention, a judgment drive force different from a plurality of test drive forces can be set, and the expected displacement of the feed axis when the judgment drive force is exerted can be predicted based on the correlation. Since it is only necessary to compare whether the relationship between the judgment drive force and the expected displacement applies to the derived correlation between the feed shaft displacement and drive force, a drive force less than the rated value can be used for the judgment drive force. As a result, the judgment drive force for judging an abnormality in the feed shaft clamp mechanism can be set to a magnitude which does not place an excessive burden on the feed shaft clamp mechanism. Furthermore, a displacement tolerance which provides a predetermined allowable fluctuation range for the predicted expected displacement can be calculated. Thus, for example, it is possible to rationally set a displacement tolerance which provides an allowable fluctuation range within the elastic range for the expected displacement in response to the judgment drive force, as well as an allowable fluctuation range of the expected displacement depending on the age and usage conditions of the machine tool and the external environment such as the temperature in the factory in which the machine tool is used. Furthermore, the actual feed shaft displacement when the judgment drive force is actually exerted on the feed axis can be measured, whereby it can be judged that the feed shaft clamp mechanism is abnormal when the measured actual feed shaft displacement deviates from the displacement tolerance. Thus, it is possible to quickly and easily judge whether there is an abnormality in the feed shaft clamp mechanism based on a comparison between the actual feed shaft displacement and the displacement tolerance, without disassembly of the machine tool.

### BRIEF DESCRIPTION OF DRAWINGS

FIG. 1 is a perspective view of a machine tool comprising an abnormality determination device according to an embodiment of the present invention.
FIG. 2 is a cross-sectional view of a table according to the present embodiment taken along the up-down direction of a machine.
FIG. 3 shows a plan view of a moving body according to the present embodiment.
FIG. 4 shows a front view of the moving body according to the present embodiment.
FIG. 5 shows a block diagram of an abnormality determination device according to the present embodiment.
FIG. 6 shows an example of a correlation between drive force and displacement for abnormality judgement according to the present embodiment, in which the judgment drive force is greater than the maximum test drive force among a plurality of test drive forces.
FIG. 7 shows an example of the correlation between drive force and displacement for abnormality judgment according to the present embodiment, in which the judgment drive force is set between the maximum test drive force and the minimum test drive force among the plurality of test drive forces.
FIG. 8 shows an example of the correlation between drive force and displacement for abnormality judgement according to the present embodiment, in which the judgment drive force is less than the minimum test drive force among the plurality of test drive forces.

### DESCRIPTION OF EMBODIMENTS

An abnormality determination device for a feed shaft clamp mechanism for a machine tool according to an embodiment will be described below with reference to the attached drawings. Identical or corresponding elements have been assigned the same reference signs, and duplicate description thereof has been omitted. In order to facilitate understanding, the scales of the drawings have been changed in some cases.

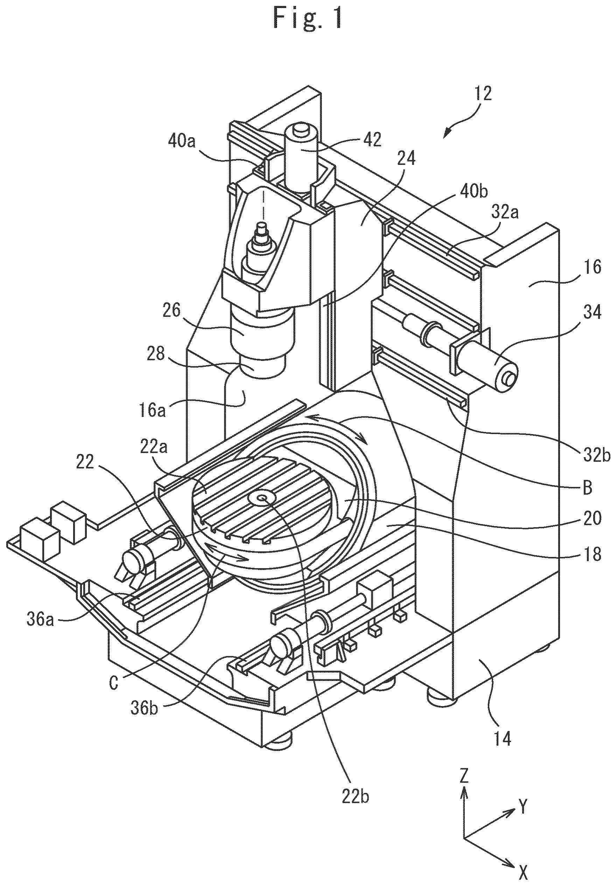

FIG. 1 shows a perspective view of a machine tool 12 comprising an abnormality determination device 10 for a feed shaft clamp mechanism according to the present embodiment. The machine tool 12 comprises a bed 14 serving as a base, and a column 16 standing on an upper surface of the bed 14. A moving body 18 is arranged on the upper surface of the bed 14. A table 22 is arranged on the moving body 18 via a tilting and rotating platform 20. A disk-shaped workpiece mounting surface 22a is formed on the upper side of the table 22 for affixation of a workpiece (not illustrated) to the upper surface thereof.

A saddle 24 is arranged on a front surface of the column 16, and a spindle head 26 is arranged on a front surface of the saddle 24. A spindle 28 configured so as to be capable of rotating is attached to the tip side, or in this case, the lower side, of the spindle head 26. The spindle 28 is configured so that a tool (not illustrated) for machining a workpiece can be detachably attached thereto while rotating together with the spindle 28.

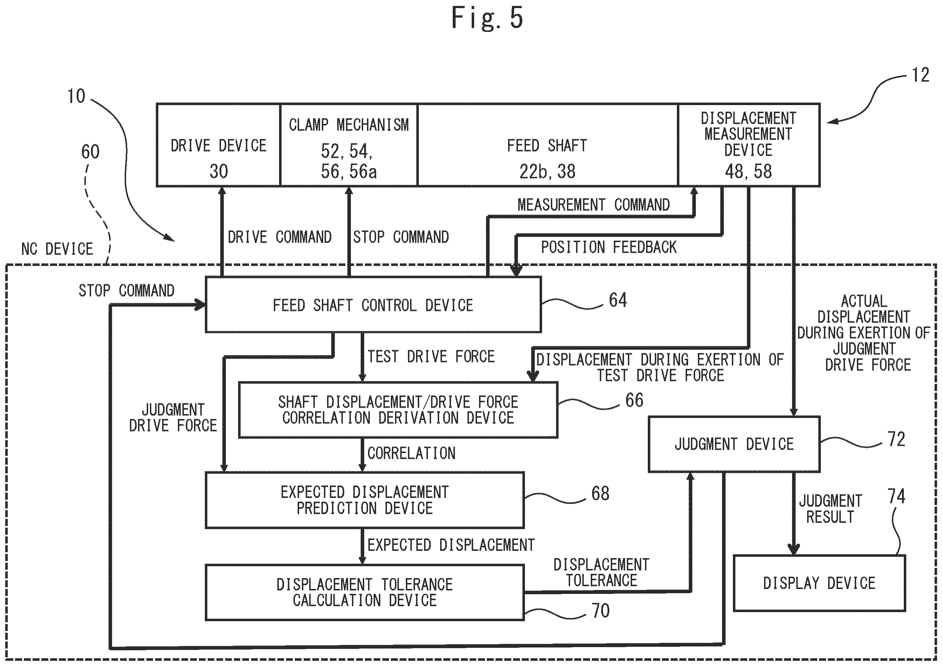

The machine tool 12 according to the present embodiment comprises a driving device 30 (refer to FIG. 5) for changing the relative position of the tool with respect to the workpiece to be machined. The machine tool 12 has a machine coordinate system preset with a predetermined position as the origin, and includes an X-axis, a Y-axis, and a Z-axis as linear feed axes which are perpendicular to each other. The machine coordinate system also includes a B-axis and a C-axis indicating directions of rotation.

The machine tool 12 according to the present embodiment is vertical, and the Z-axis thereof extends along the vertical direction. The X-axis and Y-axis are set on a plane perpendicular to the Z-axis, which is a horizontal plane in the present embodiment. In the machine tool 12 according to the present embodiment, the moving body 18 is configured so as to move along the Y-axis direction (the front-rear direction of the machine). The saddle 24 is configured so as to move along the X-axis direction (the left-right direction of the machine), and the spindle head 26 is configured so as to move along the front surface of the saddle 24 in the Z-axis direction (the up-down direction of the machine).

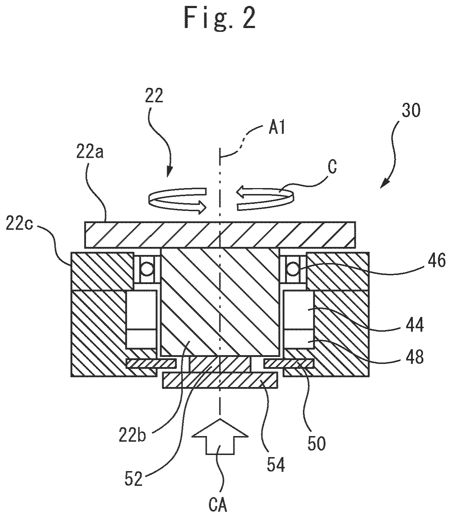

The tilting and rotating platform 20 is capable of rotating about the B-axis as the rotation direction thereof. The table 22 is capable of rotating about the C-axis around a rotation center line A1 (refer to FIG. 2). The rotation center line A1 passes through the center of a central shaft 22b, which serves as a rotary feed axis of the workpiece mounting surface 22a, and extends in a direction perpendicular to the workpiece mounting surface 22a, and specifically, in this case, along the vertical direction.

The driving device 30 is configured so as to move the tool and the workpiece relative to each other along the X-axis direction, the Y-axis direction, and the Z-axis direction, and also to rotate the tool and the workpiece relative to each other along the B-axis direction and the C-axis direction.

The driving device 30 comprises a pair of X-axis rails 32a, 32b which are formed on the front surface of the column 16 in order to move the tool and the workpiece relative to each other along the X-axis direction. The saddle 24 is attached to the X-axis rails 32a, 32b and configured so as to be capable of reciprocating along the rails. The driving device 30 further comprises an X-axis servomotor 34 for moving the saddle 24 by means of a ball screw mechanism or the like. Thus, the spindle 28 and the tool can be moved along the X-axis direction together with the saddle 24.

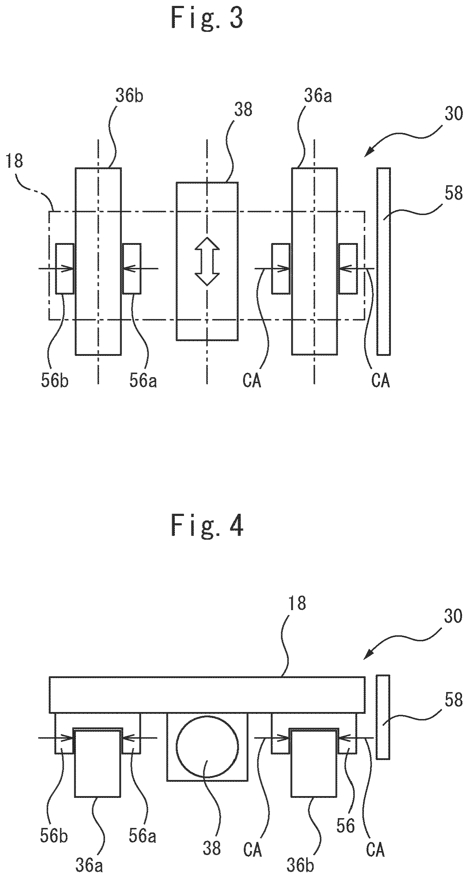

The driving device 30 comprises a pair of Y-axis rails 36a, 36b which are arranged on the upper surface of the bed 14 in order to move the tool and the workpiece relative to each other along the Y-axis direction. The moving body 18 is supported by the Y-axis rails 36a, 36b via guide blocks (not illustrated) and is configured so as to be capable of reciprocating along the rails. The column 16 has a cavity 16a through which the moving body 18 moving along the Y-axis direction can pass. The driving device 30 further comprises a Y-axis servomotor (not illustrated) on the back of the bed 14, which moves the moving body 18 by means of a ball screw mechanism 38 (refer to FIGS. 3 and 4) as a linear feed axis. Thus, the tilting and rotating platform 20 and the table 22 can be moved along the Y-axis direction together with the moving body 18.

The driving device 30 comprises a pair of Z-axis rails 40a, 40b which are formed on the front surface of the saddle 24 in order to move the tool and the workpiece relative to each other along the Z-axis direction. The spindle head 26 is attached to the Z-axis rails 40a, 40b and is configured so as to be capable of reciprocating along the rails. The driving device 30 further comprises a Z-axis servomotor 42 for moving the spindle head 26 by means of a ball screw mechanism or the like. Thus, the tool and the spindle 28 can be moved along the Z-axis direction together with the spindle head 26. Furthermore, a drive motor (not illustrated) for rotating the spindle 28 about an axis along the Z-axis direction is arranged inside the spindle head 26.

The driving device 30 comprises the tilting and rotating platform 20 having a central axis which can tilt with respect to all of the X-axis, Y-axis, and Z-axis, in order to rotate the tool and the workpiece relative to each other in the B-axis direction. A B-axis servomotor (not illustrated) for rotating the tilting and rotating platform 20 is arranged inside the moving body 18, and the tilting and rotating platform 20 can be rotated along the B-axis direction by driving the B-axis servomotor. Thus, the workpiece affixed to the table 22 can be rotated along the B-axis direction together with the tilting and rotating platform 20.

As shown in FIG. 2, the driving device 30 comprises a direct drive motor 44 (hereinafter referred to as DD motor 44) in order to rotate the tool and the workpiece relative to each other in the C-axis direction. Thus, by driving the DD motor 44, the workpiece mounting surface 22a of the table 22 and the workpiece affixed thereto can be rotated around the rotation center line A1 along the vertical direction, i.e., along the C-axis direction.

FIG. 2 is a schematic cross-sectional view of the table 22 taken along the up-down direction of the machine for detailing the feed shaft clamp mechanism of the table 22. The table 22 comprises a housing 22c an outer periphery of which is formed into a cylindrical shape and which has an internal space, and the central shaft 22b is rotatably arranged in the internal space of the housing 22c. A rolling bearing 46 is arranged on the inner periphery of the housing 22c so as to face the outer periphery of the central shaft 22b, and the workpiece mounting surface 22a and the central shaft 22b are configured so as to be capable of rotating about the rotation center line A1 via the rolling bearing 46.

The DD motor 44 for rotating and driving the central shaft 22b is arranged below the rolling bearing 46 on the inner periphery of the housing 22c. An encoder 48, such as a rotary encoder, as a displacement measurement device is attached to the inner periphery of the housing 22c below the DD motor 44 for reading the rotational position and displacement of the central shaft 22b about the rotation center line A1. In the following description, the DD motor 44 is arranged on the housing 22c, but is not limited thereto. For example, the table may be rotated using a known motor and gear train. In the present description, the displacement of the central shaft 22b is measured by the encoder 48, but is not limited thereto. Other displacement measurement device for mechanically measuring the displacement of the central shaft may be used.

A disk brake 50 formed in a hollow disk shape along the inner circumferential shape of the housing 22c is arranged below the inner periphery of the housing 22c. A cylindrical space with the rotation center line A1 as the center line is formed inside the central shaft 22b, and a clamp shaft 52 as a cylindrical feed shaft clamp mechanism extending along the vertical direction with the rotation center line A1 as the center line is arranged in the space. The clamp shaft 52 is configured as a hydraulic piston, and a contact member 54 as a disk-shaped feed shaft clamp mechanism having an outer diameter which is greater than the outer diameter of the clamp shaft 52 is formed integrally with the clamp shaft 52 at the lower end of the clamp shaft 52. The clamp shaft 52 is configured so as to be capable of moving up and down inside the central shaft 22b, and performs a clamping operation CA toward the upward side in order to clamp the central shaft 22b. Thus, the clamp shaft 52 is configured so as to be capable of being locked inside the central shaft 22b in the raised state. When the raised clamp shaft 52 is locked relative to the central shaft 22b, the upper surface of the contact member 54 comes into contact with the lower surface of the disc brake 50 and interposes the disc brake 50 with the lower surface of the central shaft 22b. As a result, rotation of the workpiece mounting surface 22a and the central shaft 22b about the rotation center line A1 is clamped, which maintains the stopped state.

FIGS. 3 and 4 are a schematic plan and front view, respectively, of the moving body 18 for detailing the clamp mechanism of the moving body 18. A clamp brake 56 as a feed shaft clamp mechanism is attached to the lower side of the moving body 18 separately from the guide block (not illustrated). The clamp brake 56 has a concave shape which opens downward when viewed from the front, and is arranged so as to straddle the Y-axis rails 36a and 36b.

The clamp brake 56 comprises grip members 56a, 56b extending vertically on both sides of the Y-axis rails 36a, 36b. The grip members 56a, 56b are configured so as to be capable of sliding toward the Y-axis rails 36a, 36b in the horizontal direction, and in this case, along the X-axis direction. Thus, the grip members 56a, 56b are clamped toward the Y-axis rails 36a, 36b to perform the clamping operation CA, thereby pressing the Y-axis rails 36a, 36b, whereby the moving body 18 is clamped. Furthermore, a scale 58 constituting an optical linear encoder (not illustrated) as a displacement measurement device for measuring the position and displacement of the moving body 18 is arranged on the side of the moving body 18 in the X-axis direction parallel to the Y-axis rails 36a, 36b. Note that though the scale 58 is described herein as constituting an optical linear encoder, the present invention is not limited thereto, and the scale may be, for example, a scale with graduations for reading the position of the moving body from an image.

Though the structure of the clamp mechanism for the central shaft 22b (C-axis), which is a rotary feed axis, has been described using FIG. 2, if the table 22 is replaced with the tilting and rotating platform 20 and the housing 22c with the housing of the moving body 18, since the moving body 18 comprises the equivalents of the DD motor 44 and rotary encoder 48, the clamp mechanism for the rotating axis (B-axis) of the tilting and rotating platform 20 can also be regarded as being substantially identical to the clamp mechanism for the central shaft 22b (C-axis). Thus, description of the clamp mechanism for the rotating axis (B-axis) of the tilting and rotating platform 20 has been omitted. Furthermore, though the structure of the Y-axis clamp brake 56 of the linear feed axis has been described using FIGS. 3 and 4, by replacing the moving body 18 in FIGS. 3 and 4 with the saddle 24 or the spindle head 26, and the Y-axis rails 36a, 36b with the X-axis rails 32a, 32b or the Z-axis rails 40a, 40b, the X-axis and Z-axis clamp brakes can be considered to be substantially identical to those of FIGS. 3 and 4. Thus, description of the X-axis and Z-axis clamp brakes has been omitted. Note that though the clamp brake 56 of the linear feed axis has been described as a type of brake which presses the Y-axis rails 36a, 36b with the grip members 56a, 56b, the present invention is not limited thereto, and the brake may be, for example, a disk brake which presses a brake pad against a disk affixed to a threaded shaft of a ball screw mechanism.

FIG. 5 shows a block diagram of the abnormality determination device 10, with the C-axis (clamp shaft 52) and the Y-axis (clamp brake 56 for the Y-axis rails 36a, 36b) as representative examples. Since the B-axis (the rotation axis of the tilting and rotating platform 20), the X-axis (X-axis rails 32a, 32b), and the Z-axis (Z-axis rails 40a, 40b) can be handled in the same manner as described above, description thereof has been omitted. The abnormality determination device 10 is attached to the machine tool 12 and incorporated in an NC device 60 for controlling the machine tool 12. In the following description, the abnormality determination device 10 is described as being incorporated in the NC device 60, but is not limited thereto, and the abnormality determination device may be configured separately from the NC device.

The abnormality determination device 10 comprises a feed shaft control device 64, a shaft displacement (rotation/displacement)/drive force correlation derivation device 66, an expected displacement prediction device 68, and a displacement tolerance calculation device 70. The feed shaft control device 64 is configured so as to transmit a drive command for operating the driving device 30 in order to move the tool and the workpiece relative to each other. The feed shaft control device 64 is also configured so as to transmit a stop command to the clamp shaft 52 and the contact member 54 for performing the clamping operation CA in order to clamp the central shaft 22b. The feed shaft control device 64 is also configured so as to transmit a stop command to the clamp brake 56 for performing the clamping operation CA in order to clamp the moving body 18, i.e., the Y-axis rails 36a, 36b.

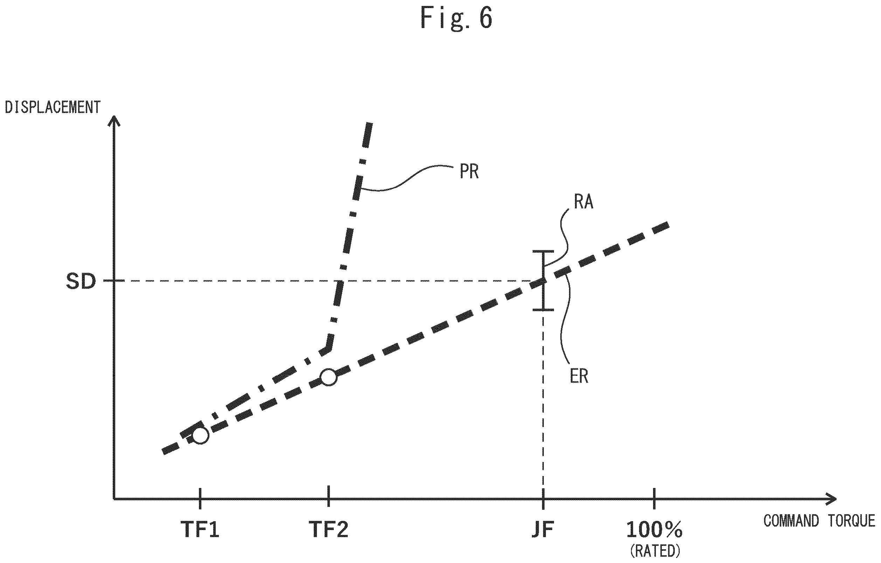

The feed shaft control device 64 is configured so as to transmit a drive command to the driving device 30 to cause it to exert a plurality of different preset test drive forces TF1, TF2 (refer to FIG. 6) on the C-axis and the Y-axis in a state in which the C-axis and the Y-axis are clamped to maintain their movements in a stopped state. The feed shaft control device 64 is also configured so as to transmit a measurement command to the encoder 48 and the scale 58 (optical linear encoder) while exerting the test drive forces TF1, TF2 on the C-axis and the Y-axis, and specifically, to measure the C-axis and the Y-axis, i.e., the rotational position of the table 22 and/or the linear position of the moving body 18, and to receive the measurement values of the rotational position and/or the linear position.

The shaft displacement/drive force correlation derivation device 66 is electrically connected to the feed shaft control device 64, as well as the encoder 48 and the scale 58, and is configured so as to receive data of the test drive forces TF1, TF2 commanded to the driving device 30 by the feed shaft control device 64, and to receive measurement values of the rotational position or linear position from the encoder 48 and the scale 58. The shaft displacement/drive force correlation derivation device 66 is also configured so as to calculate the rotational displacement or linear displacement of the C-axis and/or Y-axis from the received measurement values of the rotational position or linear position. The shaft displacement/drive force correlation derivation device 66 is further configured so as to derive a correlation between the displacement and the drive force from the rotational displacement of the C-axis or the linear displacement of the Y-axis and the corresponding test drive forces TF1, TF2.

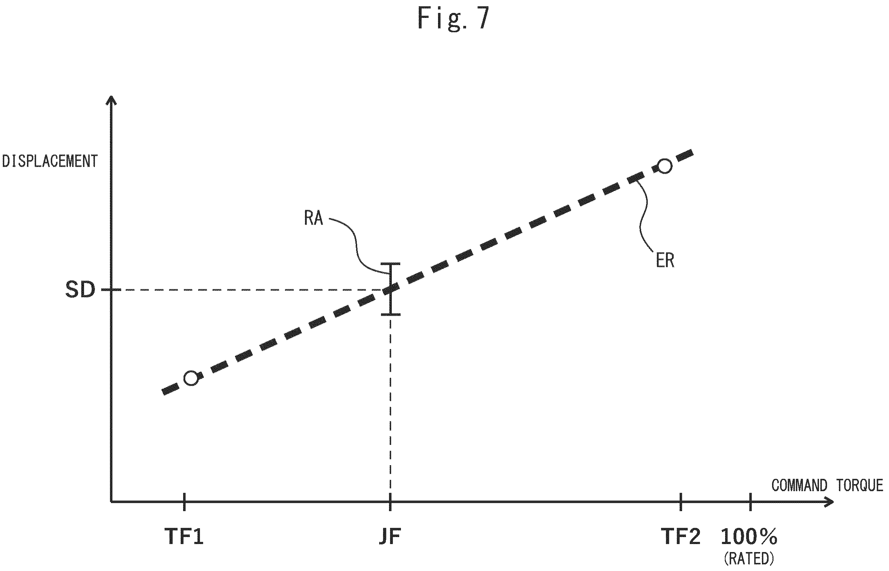

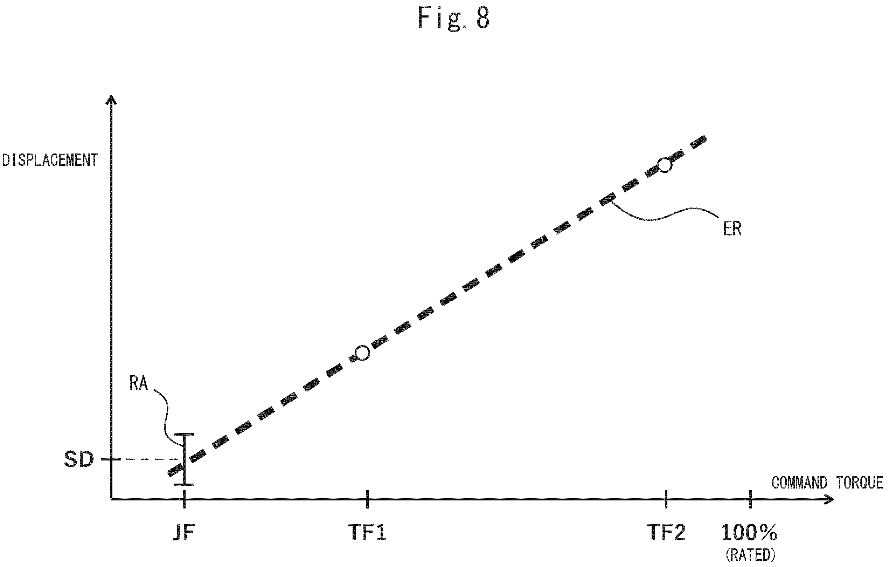

The expected displacement prediction device 68 is electrically connected to the feed shaft control device 64 and the shaft displacement/drive force correlation derivation device 66, and is configured so as to receive data of a judgment drive force JF (refer to FIGS. 6 to 8) set in advance in the feed shaft control device 64 and which is different from the plurality of test drive forces TF1, TF2, and to receive data of a correlation ER (refer to FIG. 6) between the displacement and the drive force from the shaft displacement/drive force correlation derivation device 66. The expected displacement prediction device 68 is also configured so as to predict, from the received data, an expected displacement SD (refer to FIGS. 6 to 8) of the C-axis and Y-axis when the judgment drive force JF is exerted. FIGS. 6 to 8 show the correlation ER between the displacement and the drive force for each relationship between the judgment drive force JF to be set and the plurality of test drive forces TF1, TF2. Specifically, FIG. 6 shows the correlation ER when the judgment drive force JF is greater than the maximum test drive force TF2 of the plurality of test drive forces TF1, TF2. FIG. 7 shows the correlation ER when the judgment drive force JF is set between the maximum test drive force TF2 and the minimum test drive force TF1 among the plurality of test drive forces TF1, TF2. FIG. 8 shows the correlation ER when the judgment drive force JF is less than the minimum test drive force TF1 of the plurality of test drive forces TF1, TF2.

As shown in FIG. 5, the displacement tolerance calculation device 70 is electrically connected to the expected displacement prediction device 68, and is configured so as to calculate a displacement tolerance RA (refer to FIGS. 6 to 8) for providing a predetermined allowable fluctuation range to the expected displacement SD received from the expected displacement prediction device 68. The predetermined allowable fluctuation range as used herein refers to the range of fluctuation which can occur on the individual C-axis and Y-axis, such as the allowable fluctuation range within the elastic range of the expected displacement SD for the judgment drive force JF, and the allowable fluctuation range of the expected displacement SD depending on the number of years and usage conditions of the machine tool 12 and the external environment such as the temperature in the factory in which the machine tool 12 is used.

The abnormality determination device 10 further comprises a judgment device 72. The judgment device 72 is electrically connected to the displacement tolerance calculation device 70 and is configured so as to receive data of the displacement tolerance RA calculated therefrom. The feed shaft control device 64 is configured so as to transmit a drive command to the driving device 30 to cause it to actually exert the judgment drive force JF on the C-axis and Y-axis in a state in which the C-axis and Y-axis are clamped to maintain their movements in a stopped state. The feed shaft control device 64 is also configured so as to transmit a measurement command to the encoder 48 and the scale 58 to cause them to measure the C-axis and Y-axis rotational positions and linear positions in a state in which the judgment drive force JF is exerted on the C-axis and Y-axis, and to receive the measured values of the actual rotational positions and linear positions.

The judgment device 72 is configured so as to receive the measurement values of the actual rotational position or linear position from the encoder 48 and the scale 58, and calculate the actual feed shaft displacement of the C-axis and Y-axis, i.e., the measurement values of the actual feed shaft displacement, from these. Furthermore, the judgment device 72 is configured so as to confirm whether the calculated actual feed shaft displacement is within the displacement tolerance RA, and when it deviates from the displacement tolerance RA, to judge that the clamp shaft 52 and the contact member 54 as well as the clamp brake 56 and the grip members 56a, 56b, i.e., the feed shaft clamp mechanisms 52, 54, 56, are abnormal. The judgment device 72 is electrically connected to the feed shaft control device 64, and is configured so as to send a stop command to the feed shaft control device 64 to cause it to stop the driving device 30 and the machine tool 12 including the feed shaft clamp mechanisms 52, 54, 56, when they are judged to be abnormal.

The abnormality determination device 10 further comprises a display device 74, which is electrically connected to the judgment device 72. When the judgment device 72 judges the feed shaft clamp mechanisms 52, 54, 56 to be abnormal, the display device 74 is configured so as to, for example, emit an alarm sound notifying the abnormality or display a display notifying the abnormality on a display panel of the machine tool 12, in order to quickly notify a user or the like outside the machine tool 12 of the abnormality.

Next, the mode of operation and effects of the abnormality determination device 10 will be described via description of abnormality judgment using the abnormality determination device 10 according to the present embodiment.

First, an abnormality determination method of the central shaft 22b will be described. The central shaft 22b is clamped by the feed shaft control device 64 operating the contact member 54 of the clamp shaft 52 to abut against the disk brake 50. In a state in which the central shaft 22b is clamped, the feed shaft control device 64 transmits a drive command to the driving device 30, in this case, the DD motor 44 to exert a plurality of different test drive forces TF1, TF2 (rotational torques) set in advance on the central shaft 22b. As shown in FIG. 6, the plurality of test drive forces TF1, TF2 are torques TF1, TF2 which are less than the rated torque (100%). By exerting the test drive forces TF1, TF2, a rotational displacement as feed shaft displacement is generated on the central shaft 22b with the disk brake 50 as the base point. The rotational displacement (the circle of FIG. 6) is measured by the encoder 48, and the data of the rotational displacement is transmitted to the feed shaft control device 64. The shaft displacement/drive force correlation derivation device 66 derives the correlation ER between the displacement and the drive force from the rotational displacement of the central shaft 22b obtained from the feed shaft control device 64 and the corresponding test drive forces TF1, TF2.

The inventors have conducted numerous experiments in which the same machine tool 12 was clamped and drive forces were exerted to measure displacement. As a result, it was verified that, up to a certain number of repetitions, the correlation ER between the displacement and the drive force (command torque in the drawing) is linear as shown in FIG. 6, and that the relationship between the displacement and the drive force has high repeatability, i.e., reproducibility. Furthermore, the inventors have also verified that, once the certain number of repetitions is exceeded, the relationship PR between the displacement and the drive force loses linearity due to, for example, the occurrence of plastic deformation, as shown as an example in FIG. 6.

The displacement tolerance calculation device 70 calculates the displacement tolerance RA by providing the expected displacement SD received from the expected displacement prediction device 68 with a predetermined allowable fluctuation range. The predetermined allowable fluctuation range as used herein refers to the fluctuation range which may occur in an individual central shaft 22b, such as an allowable fluctuation range within the elastic range of the expected displacement SD for the judgment drive force JF, and an allowable fluctuation range of the expected displacement SD in accordance the age and usage conditions of the machine tool 12 and the external environment such as the temperature in the factory in which the machine tool 12 is used. When the displacement tolerance RA is calculated, the feed shaft control device 64 transmits a drive command to the DD motor 44 to actually exert the judgment drive force JF on the central shaft 22b. Furthermore, the feed shaft control device 64 transmits a measurement command to the encoder 48, and causes the rotational position of the central shaft 22b to be measured.

The judgment device 72 calculates a measurement value of the actual feed shaft displacement of the central shaft 22b from the measurement value of the actual rotational position received from the encoder 48, confirms whether the calculated actual feed shaft displacement is within the displacement tolerance RA, and when it deviates from the displacement tolerance RA, judges that the clamp shaft 52 and the contact member 54 are abnormal. When the judgment device 72 judges that the clamp shaft 52 and the contact member 54 are abnormal, it transmits the abnormality to the display device 74 to cause it to display the abnormality, and also transmits a stop command to the feed shaft control device 64, causing the driving device 30 including the central shaft 22b and the machine tool 12 to stop.

Next, an abnormality determination method of the clamp brake 56 of the Y-axis rails 36a, 36b will be described. The Y-axis is clamped by the feed shaft control device 64 operating the grip members 56a, 56b of the clamp brake 56 to press the Y-axis rails 36a, 36b. In a state in which the Y-axis is clamped, the feed shaft control device 64 transmits a drive command to the driving device 30, and in this case, the Y-axis servomotor to exert a plurality of different test drive forces TF1, TF2 (torque) set in advance on the ball screw mechanism 38. The plurality of test drive forces TF1, TF2 herein are the torques TF1, TF2, which are less than the rated torque (100%). By exerting the test drive forces TF1, TF2, a linear displacement as a feed shaft displacement is generated in the moving body 18 with the clamp brake 56 as a base point. The linear displacement (the circle of FIG. 6) is measured by the scale 58, and the linear displacement data is transmitted to the feed shaft control device 64. The shaft displacement/drive force correlation derivation device 66 derives the correlation ER between the displacement and the drive force from the linear displacement of the moving body 18 obtained from the feed shaft control device 64 and the corresponding test drive forces TF1, TF2.

The displacement tolerance calculation device 70 calculates the displacement tolerance RA by providing a predetermined allowable fluctuation range to the expected displacement SD received from the expected displacement prediction device 68. The feed shaft control device 64 also sends a drive command to the Y-axis servomotor to actually exert the judgment drive force JF on the ball screw mechanism 38. The judgment device 72 confirms whether the measurement value of the actual linear motion position received from the scale 58 is within the displacement tolerance RA, and judges that the clamp brake 56 is abnormal when it deviates from the displacement tolerance RA. When the judgment device 72 judges that the clamp brake 56 is abnormal, it transmits the abnormality to the display device 74 to cause it to display the abnormality, and also sends a stop command to the feed shaft control device 64, causing the driving device 30 including the ball screw mechanism 38 and the machine tool 12 to stop.

According to the abnormality determination method and abnormality determination device 10 of the present embodiment, the feed shaft displacement is measured when a plurality of different test drive forces TF1, TF2 set in advance are exerted on the C-axis and Y-axis while the movements of the C-axis and Y-axis are maintained in a stopped state by the feed shaft clamp mechanisms 52, 54, 56, and the correlation ER between the feed shaft displacement and the drive force can be derived from the measured feed shaft displacement and the corresponding test drive forces TF1, TF2. In a normal feed shaft clamp mechanism 52, 54, 56, the correlation ER between the torque and the displacement has a certain linearity. Thus, in order to derive the correlation ER between the feed shaft displacement and the drive force, it is sufficient to understand the plurality of test drive forces TF1, TF2 and the feed shaft displacements corresponding thereto, and a drive force less than the rated torque can be used for the test drive forces TF1, TF2. As a result, the correlation ER between the feed shaft displacement and the drive force for judging these abnormalities can be derived without placing an excessive burden on the feed shaft clamp mechanisms 52, 54, 56.

Furthermore, according to the abnormality determination method and abnormality determination device 10 of the present embodiment, a judgment drive force JF different from the plurality of test drive forces TF1, TF2 can be set, and the expected displacement SD of the C-axis and Y-axis when the judgment drive force JF is exerted can be predicted based on the correlation ER. Since it is only necessary to compare whether the relationship between the judgment drive force JF and the expected displacement SD applies to the derived correlation ER between the feed shaft displacement and the drive force, a drive force less than the rated torque can be used for the judgment drive force JF. As a result, the judgment drive force JF for judging abnormality in the feed shaft clamp mechanisms 52, 54, 56 can be set to a magnitude which does not place an excessive burden on the feed shaft clamp mechanisms 52, 54, 56.

According to the abnormality determination method and abnormality determination device 10 of the present embodiment, a displacement tolerance RA which provides a predetermined allowable fluctuation range for the predicted expected displacement SD can be calculated. Thus, for example, it is possible to rationally set a displacement tolerance RA which provides an allowable fluctuation range within the elastic range for the expected displacement SD for the judgment drive force JF, as well as an allowable fluctuation range for the expected displacement SD according to the years of use and usage conditions of the machine tool and the external environment such as the temperature in the factory in which the machine tool is used. Further, it is possible to measure the actual feed shaft displacement when the judgment drive force JF is actually exerted on the C-axis and Y-axis, and to judge that the feed shaft clamp mechanisms 52, 54, 56 are abnormal when the measured actual feed shaft displacement deviates from the displacement tolerance RA. Thus, the presence or absence of abnormality in the feed shaft clamp mechanisms 52, 54, 56 can be judged quickly and easily based on a comparison between the actual feed shaft displacement and the displacement tolerance RA without disassembly of the machine tool.

As described above, the abnormality determination device 10 according to the present embodiment can judge abnormalities in the clamp shaft 52 and the clamp brake 56 without placing excessive strain on the clamp shaft 52 and the clamp brake 56 and without disassembly of the machine tool 12.

Though the presence or absence of an abnormality in the feed shaft clamp mechanisms 52, 54, 56 is judged by comparing the judgment drive force JF and the displacement tolerance RA in the above description, the present invention is not limited thereto, and judgment may be performed based on, for example, a time series of the displacement generated when the drive force is exerted, and specifically, the shape and tendency of the displacement waveform. When judging based on the shape and tendency of the displacement waveform in this manner, the displacement waveform may be judged as being elastic or inelastic by statistical processing using a computer or the like, and such statistical processing may utilize data processing such as image processing of the displacement waveform or big data generation using AI.

According to normal feed shaft clamp mechanisms 52, 54, 56, the correlation ER between torque and displacement has a certain linearity. Thus, regardless of the magnitude relationship between the judgment drive force JF and the test drive forces TF1, TF2, if the correlation ER between torque and displacement is linear, it can be judged as normal, and if the relationship significantly deviates from linearity, it can be judged as abnormal.

Although the embodiments of the abnormality determination device 10 of the machine tool 12 have been described above, the present invention is not limited to the above embodiments. Various modifications of the above embodiments are included in the embodiments of the present invention within the scope of the imagination of a person skilled in the art. Though the relationship between the displacement of the feed shaft and the drive force during clamping has been described as being linear, the inventors have confirmed in previous experiments that the relationship between the normal displacement and the drive force may be approximated by a quadratic function or other function in the elastic range. Thus, the relationship between the displacement and the drive force may be approximated by a quadratic function or other function as an embodiment of the present invention. Specifically, when the relationship between the displacement and the drive force is previously determined, the feed shaft displacements corresponding to the plurality of test drive forces can be measured and the correlation between the feed shaft displacement and the drive force can be derived uniquely. Furthermore, the plurality of test drive forces TF1, TF2 are exemplified here as two forces, but are not limited thereto, and three or more test drive forces may be used. Furthermore, the correlation may be derived by deriving an approximate straight line, an approximate quadratic curve, etc., from three or more feed shaft displacements for three or more test drive forces.

### DESCRIPTION OF REFERENCE SIGNS

- 10: abnormality determination device
- 12: machine tool
- 22b: central shaft(rotary feed axis)
- 38: ball screw mechanism(linear feed axis)
- 48: encoder(displacement measurement device)
- 52: clamp shaft(feed shaft clamp mechanism)
- 54: contact member(feed shaft clamp mechanism)
- 56: clamp brake(feed shaft clamp mechanism)
- 58: scale(displacement measurement device)
- 64: feed shaft control device
- 66: shaft displacement/drive force correlation derivation device
- 68: expected displacement prediction device
- 70: displacement tolerance calculation device
- 72: judgment device
- 74: display device
- ER: correlation
- JF: judgment drive force
- SD: expected displacement
- TF1: test drive force
- TF2: test drive force
- RA: displacement tolerance

## Claims

1. An abnormality determination method for a feed shaft clamp mechanism of a machine tool, which is provided on a feed axis of the machine tool for maintaining a stopped state of the feed axis, the method comprising the steps of:
maintaining a stopped state of movement of the feed axis by the feed shaft clamp mechanism,
measuring feed shaft displacement when a plurality of different test drive forces set in advance are exerted on the feed axis,
deriving a correlation between the feed shaft displacements and drive force from the measured feed shaft displacements and the corresponding test drive forces,
setting a judgment drive force different from the plurality of test drive forces, and predicting an expected displacement of the feed axis when the judgment drive force is exerted based on the correlation,
calculating a displacement tolerance which provides a predetermined allowable fluctuation range for the predicted expected displacement,
measuring an actual feed shaft displacement when the judgment drive force is actually exerted on the feed axis, and
judging that the feed shaft clamp mechanism is abnormal when the measured actual feed shaft displacement deviates from the displacement tolerance.

2. The abnormality determination method for a feed shaft clamp mechanism of a machine tool according to claim 1, wherein the judgment drive force is greater than a maximum test drive force of the plurality of test drive forces.

3. An abnormality determination device for a feed shaft clamp mechanism of a machine tool comprising a feed shaft drive device for driving a feed axis, a displacement measurement device for the feed axis, and a feed shaft clamp mechanism for maintaining a stopped state of driving of the feed axis, the device comprising:
a shaft displacement/drive force correlation derivation device for exerting a plurality of different test drive forces set in advance on the feed axis by means of the feed shaft drive device in a state in which a stopped state of movement of the feed axis is maintained by the feed shaft clamp mechanism, and deriving, from feed shaft displacements measured by the displacement measurement device and the corresponding test drive forces, a correlation between the feed shaft displacements and drive force,
an expected displacement prediction device for setting a judgment drive force different from the test drive forces from the correlation derived by the shaft displacement/drive force correlation derivation device, and predicting an expected displacement of the feed axis when the judgment drive force is exerted based on the correlation,
a displacement tolerance calculation device for calculating a displacement tolerance which provides a predetermined allowable fluctuation range for the expected displacement predicted by the expected displacement prediction device, and
a judgment device for judging that the feed shaft clamp mechanism is abnormal when the actual feed shaft displacement measured by the displacement measurement device in a state in which the judgment drive force is actually exerted on the feed shaft deviates from the displacement tolerance calculated by the displacement tolerance calculation device.

4. The abnormality determination device for a feed shaft clamp mechanism of a machine tool according to claim 3, wherein the judgment drive force is greater than a maximum test drive force of the plurality of test drive forces.

5. The abnormality determination device for a feed shaft clamp mechanism of a machine tool according to claim 4, wherein the correlation between the feed shaft displacement and the drive force is a relationship in an elastic range.

6. The abnormality determination device for a feed shaft clamp mechanism of a machine tool according to claim 5, comprising a display device for displaying a judgment result by the judgment device.

7. The abnormality determination device for a feed shaft clamp mechanism of a machine tool according to claim 6, comprising a feed shaft control device which is arranged on the machine tool for operating the feed shaft drive device and the feed shaft clamp mechanism, wherein the feed shaft control device causes the feed axis to be stopped when the judgment device judges that the feed shaft clamp mechanism is abnormal.

8. The abnormality determination device for a feed shaft clamp mechanism of a machine tool according to any one of claims 3 to 7, wherein the feed axis is a rotary feed axis or a linear feed axis.
